# EUROPEAN PATENT APPLICATION

(11) **EP 2 362 618 A1**
(43) Date of publication of application: **31.08.2011**
(21) Application number: 11153632.2
(22) Date of filing: 08.02.2011
(51) Int. Cl.: H04M 1/725

(54) **Method and apparatus for adaptively using vNote in portable terminal**

(30) Priority: 12.02.2010 KR 20100013244
(71) Applicant: SAMSUNG ELECTRONICS CO., LTD., Suwon-si Gyeonggi-do 442-742 (KR)
(72) Inventor: Lee, Kyong-Hun, 442-742, Gyeonggi-do (KR); Kang, Min-Jee, 442-742, Gyeonggi-do (KR); Jeong, Hyo-Moon, 442-742, Gyeonggi-do (KR)
(74) Representative: Jenkins, Richard Gavin

(57) **Abstract**

Provided is a method and apparatus for adaptively using vNote in a portable terminal. The method includes determining whether a Bluetooth messenger is in operation upon reception of a vNote message, preventing a display notification window indicating reception of the vNote message if it is determined that the Bluetooth messenger is in operation, and displaying the received vNote message through the Bluetooth messenger in operation.

## Description

### BACKGROUND OF THE INVENTION

### 1. Field of the Invention

The present invention generally relates to a portable terminal, and more particularly, to a technique for adaptively using a vNote in a portable terminal.

### 2. Description of the Related Art

Recently, a wider application of Bluetooth technology is growing. Bluetooth uses a frequency of 2.45 GHz which is the same Industrial, Scientific and Medical (ISM) band as 802.11b/g, a wireless Local Area Network (LAN) standard, and Bluetooth devices can perform wireless communication through processes such as search/selection/authentication (paring) with respect to neighboring Bluetooth devices.

Bluetooth has been rapidly popularized at its 2.0 version as communication quality level is guaranteed by addition of an Enhanced Data Rate (EDR) standard. With the popularization of Bluetooth, portable terminals having a Bluetooth function have also come into common use. In particular, short-range data communication using Bluetooth has been popularized, and an example thereof is message exchange through vNote transmission/reception using Bluetooth communication.

Meanwhile, a Bluetooth messenger may be an example of short-range communication using Bluetooth. The Bluetooth messenger functions to transmit and receive vNote through a profile such as an Object Push Profile (OPP), and allows a real-time chatting function by displaying vNote messages on a display screen of the Bluetooth messenger. vNote, specified in Infrared Mobile Communication (IrMC), defines a format of a message or a note. Users of portable terminals can exchange messages through transmission and reception of vNote.

The Bluetooth messenger using vNote provides the chatting function by allowing free and convenient message exchange through Bluetooth communication, but a notification window (conformation window) indicating reception of a vNote message is displayed in the form of a pop-up window for every reception of a vNote message, causing inconvenience in using the chatting function to the user. This convenience originates from security setting in Bluetooth communication, such that the user has to check the notification window displayed for every reception of a vNote message from a communication partner, thus periodically interrupting the ongoing chatting session.

Therefore, it is necessary to cure inconvenience in using the chatting function based on vNote messages due to interruptions by notification windows indicating reception of the vNote messages.

### SUMMARY OF THE INVENTION

Accordingly, an aspect of the present invention is to provide a technique for preventing chatting interruption by notification windows (pop-up windows) indicating reception of the vNote messages using a Bluetooth messenger based on vNote messages.

According to an aspect of the present invention, a method for adaptively using vNote in a portable terminal includes determining whether a Bluetooth messenger is in operation upon reception of a vNote message, displaying no notification window indicating reception of the vNote message if it is determined that the Bluetooth messenger is in operation, and displaying the received vNote message through the Bluetooth messenger in operation.

### BRIEF DESCRIPTION OF THE DRAWINGS

The above and other features and advantages of an exemplary embodiment of the present invention will be more apparent from the following detailed description taken in conjunction with the accompanying drawings, in which:
FIG. 1 is a block diagram of a portable terminal according to an embodiment of the present invention;
FIG. 2 is a flowchart illustrating a process of adaptively using a vNote message in a portable terminal according to an embodiment of the present invention; and
FIG. 3 is an exemplary diagram for describing a process of adaptively using a vNote message in a portable terminal according to an embodiment of the present invention.

### DETAILED DESCRIPTION OF THE INVENTION

Hereinafter, an embodiment of the present invention will be described in detail with reference to the accompanying drawings. In an embodiment of the present invention, a Bluetooth messenger means a messenger which provides a real-time chatting function through a Bluetooth communication by transmitting and receiving vNote messages through an Object Push Profile (OPP).

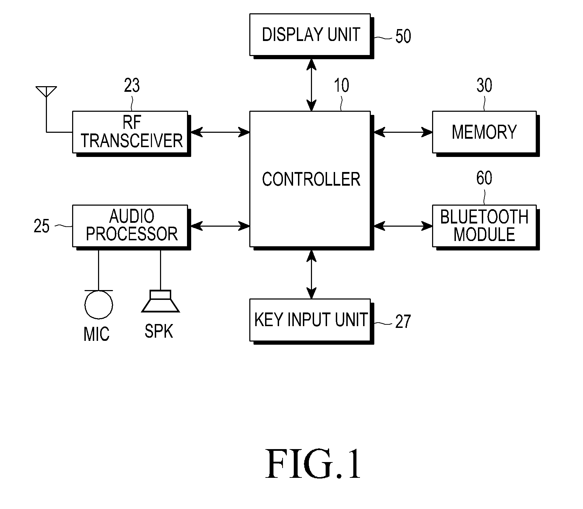

FIG. 1 is a block diagram of a portable terminal according to an embodiment of the present invention.

Referring to FIG. 1, a key input unit 27 includes keys for inputting numeric and character information and functional keys for setting various functions. A user can generate a vNote message via a manipulation of the key input unit 27 according to an embodiment of the present invention.

A Radio Frequency (RF) transceiver 23 for performing a wireless communication function includes an RF unit and a modem. The RF unit includes an RF transmitter for up-converting a frequency of a transmission signal and amplifying the up-converted transmission signal, and an RF receiver for low-noise-amplifying a received signal and down-converting a frequency of the low-noise-amplified signal. The modem includes a transmitter for encoding and modulating the transmission signal and a receiver for demodulating and decoding the received signal.

An audio processor 25 may constitute a codec including a data codec and an audio codec. The data codec processes packet data and the audio codec processes audio signals like voice and a multimedia file. The audio processor 25 also converts a digital audio signal received from the modem into an analog audio signal through the audio codec and reproduces the analog audio signal, or converts an analog audio signal generated from a microphone (MIC) into a digital audio signal through the audio codec and transmits the digital audio signal to the modem. The codec may be separately provided or may be included in a controller 10 of the portable terminal. Upon completion of generation of a vNote message or completion of transmission or reception of the vNote message, the audio processor 25 according to an embodiment of the present invention may inform a user of the completion by using audio information.

A memory 30 includes a Read Only Memory (ROM) and a Random Access Memory (RAM). The memory 30 may include program memories and data memories and store programs for controlling an operation of the portable terminal and data for booting.

A display unit 50 displays an image signal and user data on a screen or displays data associated with communication. The display unit 50 may include a Liquid Crystal Display (LCD), an Organic Light Emitting Diodes (OLED), or an Active Matrix Organic Light Emitting Diodes (AMOLED). When the LCD, OLED, or AMOLED is implemented with a touch screen, the display unit 50 may operate as an input unit for controlling the portable terminal, together with the key input unit 27. As such, the display unit 50 according to an embodiment of the present invention may serve as an input unit for controlling the portable terminal, together with the key input unit 27, by including a touch screen. In operation, the display unit 50 according to an embodiment of the present invention displays a received vNote message and the displayed vNote message may be displayed through an executed Bluetooth messenger.

A Bluetooth module 60 performs Bluetooth communication with another Bluetooth device (for example, a portable terminal such as a mobile communication terminal, an MP3 player, a PC, or a PDA) through a Bluetooth antenna according to a Bluetooth protocol. In the Bluetooth module 60 are stored a host stack for managing Bluetooth communication, a Bluetooth profile selected according to functions or conditions of external Bluetooth devices targeted for communication, and application programs. The Bluetooth profile includes various profiles such as a HandsFree Profile (HFP) for supporting handsfree sets, a HeadSet Profile (HSP) for supporting headsets, an Advanced Audio Distribution Profile (A2DP) for supporting stereo audio, or an Audio/Video Remote Control Profile (AVRCP), from among which a profile corresponding to a connected Bluetooth device is selectively used. The Bluetooth module 60 according to an embodiment of the present invention includes an OPP and provides a Bluetooth messenger function through the included OPP. The Bluetooth module 60 according to an embodiment of the present invention may be included in the RF transceiver 23.

The controller 10 controls the overall operation of the portable terminal. The controller 10 according to an embodiment of the present invention checks a type of data transmitted and received through Bluetooth communication, and checks whether a Bluetooth messenger is in operation (or activated) if the type of the received data is a vNote message. Thereafter, the controller 10 according to an embodiment of the present invention controls the display unit 50 not to display a notification window indicating reception of the vNote message if the Bluetooth messenger is in operation; if the Bluetooth messenger is not being executed, the controller 10 controls the display unit 50 to display the notification window indicating reception of the vNote message.

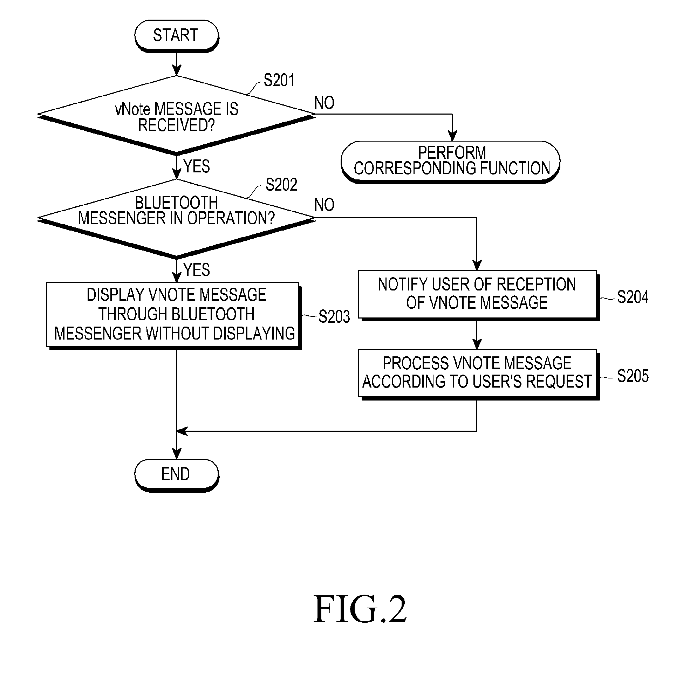

Herein after, detailed operations of the controller 10 according to an embodiment of the present invention will be described below with reference to FIG. 2.

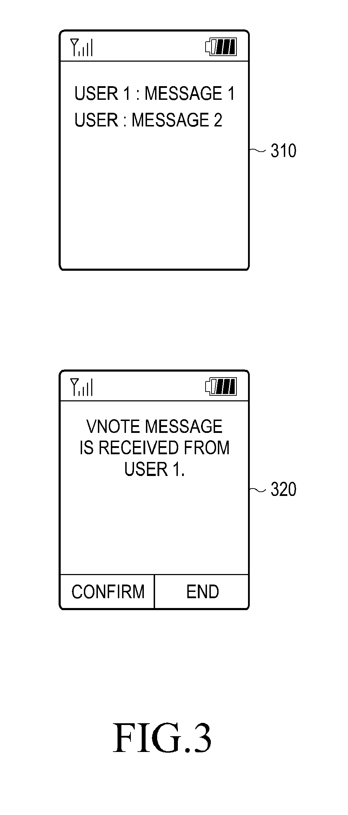

FIG. 2 is a flowchart illustrating a process of adaptively using a vNote message in the portable terminal according to an embodiment of the present invention, and FIG. 3 is an exemplary diagram for describing the process of adaptively using a vNote message in the portable terminal according to an embodiment of the present invention.

A description will now be made of an embodiment of the present invention with reference to FIGs. 1 through 3.

In steps S201 and S202, the controller 10 determines whether a vNote message is received through Bluetooth communication, and if so, the controller 10 determines whether a Bluetooth messenger is in operation.

If the controller 10 determines that the Bluetooth messenger is in operation in step S202, the controller 10 controls the display unit 50 to display the received vNote message (message1) as illustrated 310 in Fig.3 through the Bluetooth messenger without displaying a confirmation window indicating reception of the vNote message, by adjusting a security level of Bluetooth communication in step S203. At this time, it is assumed that a vNote message (message2) generated by a user for transmission is also displayed through the Bluetooth messenger. In this way, once the transmission and received vNote messages are displayed through the Bluetooth messenger, the user can be provided with a chatting function using Bluetooth communication.

Hereinafter, a more detailed description will be made of a control operation described above which does not notify the user of reception of the vNote message by adjusting the security level of Bluetooth communication.

Bluetooth communication has four security levels, including Security Mode 1 (non-secure), Security Mode 2 (service level enforced security), Security Mode 3 (link level enforced security), and Security Mode 4 (service level enforced security). Typically, Security Mode 2 is used as the security level. Therefore, it is assumed that the portable terminal according to an embodiment of the present invention also performs Bluetooth communication in Security Mode 2.

In operation, when a vNote message is received during operation of the Bluetooth messenger, the controller 10 according to an embodiment of the present invention changes the security level from Security Mode 2 into Security Mode 1 not to display a confirmation window.

According to a modification of an embodiment of the present invention, even when reception of a vNote message is set to be notified and a confirmation window requesting confirmation of the notification is set to be displayed based on the security level (for example, Security Mode 2), the controller 10 may provide a key value corresponding to user's confirmation to the Bluetooth module 60 without displaying the confirmation window if the Bluetooth messenger using vNote is in operation. Thus, the controller 10 does not need to change the security level of Bluetooth communication (for example, does not need to change Security Mode 2 into Security Mode 1), and the user can avoids the inconvenience of seeing a confirmation window every reception of a vNote message from a partner and inputting a confirmation key.

Meanwhile, if it is determined that the vNote message is received during operation of the Bluetooth messenger in steps S201 through 5203, the controller 10 controls the display unit 50 not to display a confirmation window indicating reception of the vNote message. Setting for displaying the confirmation window may be changed by the user through a separate setting menu to display the confirmation window when the vNote message is received during operation of the Bluetooth messenger through S201-S203.

According to a modification of an embodiment of the present invention, the user may preset or program whether to be notified of reception of data through a confirmation window according to a type of the data received through Bluetooth communication. For example, the user may perform a setting operation such that a confirmation window is not displayed when multimedia data such as an mp3 file or a picture is received, and when data associated with system setting is received, reception of the data is notified through a separate confirmation window.

Referring back to FIG. 2, if determining that the Bluetooth messenger is not in operation in step 202, the controller 10 notifies the user of reception of the vNote message in step S204.

If it is determined that the vNote message is received during the non-operation state of the Bluetooth messenger, the controller 10 notifies the user of reception of the vNote message through a confirmation window as indicated by 320 of FIG. 3. While a reception of the vNote message is notified to the user through the confirmation window according to the embodiment of the present invention, a reception of other data (e.g., a picture, an mp3 file, or a document) through Bluetooth communication may also be notified to the user through the confirmation window.

In step S205 after step S204, the controller 10 processes the received vNote message according to a request of the user.

When the confirmation window as indicated by 320 of FIG. 3 is displayed, the user may request a display of the received vNote message by inputting a key corresponding to message confirmation or request non-display of the received vNote message by inputting a key corresponding to termination (or end). Thus, the controller 10 according to an embodiment of the present invention may selectively control the display unit 50 to display or not to display the vNote message according to the request for message confirmation or termination.

As can be appreciated from the foregoing description, when the Bluetooth messenger is in operation, the notification window indicating reception of the vNote message is not displayed, thereby preventing chatting mode being interrupted by the display of the notification window. In addition, a separate key manipulation for manipulating the notification window is not necessary according to the teachings of the present invention, thus allowing the user to rapidly and conveniently use the Bluetooth messenger. The foregoing is to be constructed as only being an illustrative embodiment of this invention. Persons skilled in the art can easily conceive of alternative arrangements providing a functionality similar to this embodiment without any deviation from the fundamental principles or the scope of this invention.

Further, note that the above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

While the present invention has been described in detail, an embodiment mentioned in the course of description is merely illustrative rather than restrictive and changes in components that can be substituted equivalently in the present invention also fall within the scope of the present invention, without departing from the technical spirit and scope of the invention as provided in the accompanying claims.

## Claims

1. A method for adaptively using vNote in a portable terminal, the method **characterized by**:
determining whether a Bluetooth messenger is in operation upon reception of a vNote message;
preventing a display of notification window indicating reception of the vNote message if it is determined that the Bluetooth messenger is in operation; and
displaying the received vNote message through the Bluetooth messenger.

2. The method of claim 1, further **characterized by** displaying a notification window indicating a reception of the vNote message if it is determined that the Bluetooth messenger is not in operation.

3. The method of claim 2, further **characterized by** displaying the received vNote message according to a user's request when the Bluetooth messenger is not in operation.

4. The method of claim 1, further **characterized by** preventing the display of notification indicating reception of the vNote message if multimedia data is received.

5. The method of claim 4, further **characterized by** displaying a reception of the multimedia data via another notification window.

6. The method of claim 1, further **characterized by** displaying a notification indicating reception of other data in the notification window when the Bluetooth messenger is in operation.

7. The method of clam 1, further **characterized by** selectively setting the terminal to display or prevent a display of the notification window indicating reception of the vNote message if it is determined that the Bluetooth messenger is in operation.

8. The method of claim 1, wherein preventing the display of notification window comprises preventing a pop up window indicating reception of the vNote message.

9. An apparatus for adaptively using vNote in a portable terminal, **characterized by**:
a controller (10) configured to determine whether a Bluetooth messenger is in operation upon reception of a vNote message, preventing a display of notification window indicating reception of the vNote message if it is determined that the Bluetooth messenger is in operation, and displaying the received vNote message through the Bluetooth messenger; and
a display unit (50) configured to display the received vNote message under control of the controller.

10. The apparatus of claim 9, wherein the controller (10) configured to control the display unit (50) to display the notification window indicating reception of the vNote message if it is determined that the Bluetooth messenger is not in operation.

11. The apparatus of claim 9, wherein the controller (10) configured to control the display unit (50) to display the received vNote message according to a user's request when the Bluetooth messenger is not in operation.

12. The apparatus of claim 9, wherein the controller (10) configured to prevent the display of notification indicating reception of the vNote message if multimedia data is received.

13. The apparatus of claim 10, wherein the controller (10) configured to display a reception of the multimedia data via another notification window.

14. The apparatus of claim 9, wherein the controller (10) configured to display a notification indicating reception of other data in the notification window when the Bluetooth messenger is in operation.

15. The apparatus of claim 9, wherein the controller (10) configured to selectively set the terminal to display or prevent a display of the notification window indicating reception of the vNote message if it is determined that the Bluetooth messenger is in operation.

16. The apparatus claim 9, wherein the controller prevents the display of notification window comprises preventing a pop up window indicating reception of the vNote message.
